# EUROPÄISCHE PATENTANMELDUNG

(11) **EP 1 757 187 A2**
(43) Veröffentlichungstag der Anmeldung: **28.02.2007**
(21) Anmeldenummer: 06013676.9
(22) Anmeldetag: 01.07.2006
(51) Int. Cl.: A01N 65/00, A01N 59/26, A01N 59/06, A01N 59/02, C05G 1/00, A01P 3/00

(54) **Präparat zur Verbesserung der Krankheitsresistenz und der Wachstum von Pflanzen**

(30) Priorität: 16.08.2005 DE 102005038967
(71) Anmelder: Tilco Biochemie GmbH, 23858 Reinfeld (DE)
(72) Erfinder: Scharafat, Iradj, 23843 Travenbrück (DE)
(74) Vertreter: Klickow, Hans-Henning

(57) **Zusammenfassung**

Das Präparat dient zur Verbesserung der Krankheitsresistenz von Pflanzen und zur Verbesserung der Nährstoffversorgung von Pflanzen. Darüber hinaus erfolgt eine Erhöhung der Bodenfruchtbarkeit und eine Verbesserung des Pflanzenwachstums. Das Präparat enthält mindestens eine erste organische Komponente sowie mindestens eine zweite anorganische Komponente. Vorzugsweise enthält das Präparat mindestens ein Phosphat, eine verbindung aus der Gruppe der Sulfite, der Sulfide sowie der Thiosulfate sowie mindestens ein Algenextrakt. Durch die Zugabe von Aminosäuren, Kohlehydraten und/oder Fetten läßt sich die Wirksamkeit nochmals verbessern.

## Beschreibung

Die Erfindung betrifft ein Präparat zur Behandlung von Pflanzen, insbesondere für die Erhöhung der Resistenz der Pflanzen gegen Pilzkrankheiten, zur Verbesserung des Verdunstungsschutzes sowie zur optimalen Ernährung der Pflanzen mit Nährstoffen. Das Präparat ist aus mindestens einer ersten Komponente und einer zur ersten Komponente unterschiedlichen zweiten Komponente zusammengesetzt und die zweite Komponente ist als eine Verbindung aus der Gruppe der Phosphate, der Polyphosphate, der Phosphite, der Phosphonate der Polyphosphorsäure, der Salze der Pholyphosphorsäure, der Phosphorigen Säuren, der Phosphorsäure sowie der Salze der Phosphorigen Säuren und (oder) Phosphorsäure, Stickstoffsalze der Ammonium , Nitrite, Nitrate, Amide, Amine, Harnstoffverbindungen, Methylurea und Ammoniak, Ammoniumlauge, Salpetersäure und deren Salze, Kalium, Kaliumsalze Kaliumoxid, Kaliumhydroxid, Kaliumsalze, Kaliumnitrat, Kaliumsulfat, Kaliumthiosulfat, Amoniumthiosulfat (auch andere Thiosulfate), Kaliumsulfid, Amoniumsulfid, Kaliumchlorid, Kalium- Magnesium-Salze, Magnesiumsalze, Magnesiumsulfat, Magnesiumnitrat, Magnesiumcarbonat, Magnesium und Kalziumcarbonat, Eisensulfat zwei- und dreiwertig, Eisenchlorid, Eisennitrat, Eisencarbonat, realisiert. Die erste Komponente enthält organische Verbindungen, die mindestens zu einem Teil aus mindestens einer Aminosäure sowie zu einem Teil aus mindestens einem Algenmehl-Extrakt nicht aufgeschlossen oder (und) aufgeschlossenem Algenmehl (mit Natriumoxid, -hydroxid, Carbonate oder und andere Salze oder Kaliumoxid, -hydroxid, -carbonate oder und anderer Salze bzw. Alkalimetalle behandelt und aufgeschlossen), Schwefel, Schwefelsäure, Schwefelsalze, Eisensulfat, Eisenchlorid, Eisencarbonat, Kalzium, Kalziumoxid, -hydroxid, - carbonat, -nitrat, -phosphat, bestehen.

Bekannte derartige Präparate werden einzeln und gemischt eingesetzt, um den Nährstoffbedarf der Nutzpflanzen und des Bodens zu verbessern oder die Luft-, Wasser- und Nährstoff-Speicherkraft des Bodens zu verbessern. Die bekannten Präparate weisen in der Regel eine spezifische Wirkung auf und es können die Anforderungen an eine Wirksamkeit gegen Krankheiten mit guter Nährstoffversorgung nicht erfüllt werden.

Aufgabe der vorliegenden Erfindung ist es, ein Präparat der einleitend genannten Arten derart anzugeben, dass bei einer Vielzahl von Anwendungen eine optimale Wirksamkeit gegen Krankheiten bereitgestellt wird.

Diese Aufgabe wird erfindungsgemäß dadurch gelöst, dass eine Verwendung durch Applikation als Granulat, Paste oder Flüssigkeit vorgesehen ist und dass in der organischen Komponente Algenmaterial (Braunalgen, Rotalgen aller Arten) enthalten sind.

Die obigen Komponentenkombinationen können zusätzlich mit bekannten und in der Praxis angewandten Düngern gemischt werden, um eine breitere und/oder längere Wirkung zu erzielen.

Die Präparate können als feste und flüssige Mittel zum Spritzen, Sprühen oder als Granulat formuliert werden. Die Präparate können darüber hinaus auch als Paste zum Streichen sowie als feste Formulierung zum streuen realisiert sein.

Als Beispiel sind folgende Verbindungen und Salze zu erwähnen:
Als Komponente des Präparates können flüssige und feste natürliche oder synthetische organische oder anorganische Verbindungen und Mischungen verwendet werden, die eine Stärkung der Pflanzen, ein erhöhtes Wachstum und eine Verbesserung der Gesundheit der Pflanzen gegenüber Pilzkrankheiten und oder Ertragssteigerung und bessere Qualität bewirken.

Verwendbar sind beispielsweise:
a) Algenmaterialien wie zum Beispiel frische Algen oder Algenteile, Algenmehle aus verschiedenen Arten und verschiedener Herkunft, insbesondere Braunalgen, Laminaria, Ascophylum u.a. sowie Rotalgen in Rohform oder verarbeitet.
b) Algenextrakte und Pasten in allen möglichen Präsentationen wie Blattdünger, Wachstumsförderer, Pflanzenstärkungsmittel, Bodendünger und Bodenverbesserer etc.
c) Alginate-, Pektinate-, und andere Polysaccharidsalze wie Na, Ca, Cu, K, Mg, Mn, Fe, NH4, usw.
d) Aminosäuren einzeln oder in Mischungen, aus tierischer, pflanzlicher oder synthetischer Herkunft.
e) Zucker und Polysaccharide wie Melasse oder zuckerhaltige Extrakte und Stoffe.
f) Produkte aus Pflanzenmaterial, Sud, Brei, Extrakte etc.
g) Organische und anorganische Materialien wie Wirtschaftsdünger, Komposte, Wurmhumus, organische und anorganische Dünger, Spurenelemente, Bodenverbesserer, Strukturverbesserer, Tonmineralien, Sande, Silizium, Kolloidbildner, slow-release Formulierungshilfsstoffe, synthetische organische und anorganische Substanzen sowie Erden.
h) Torf, Humus und Huminsäure aus Braun- und Steinkohle.

Als zweite Komponente können Säuren, Laugen und ihre organischen und anorganischen Salze, Schwefel, Schwefelsäure, Schwefligesäure, Phosphor, Phosphorsäure, Phosphorige Säure, Salpetersäure, Salzsäure, Chlor, Kalium, Kalilauge, Kaliumoxid, -hydroxid, Natrium , Natriumoxid, -hydroxid, Natronlauge, Kalzium, Kalziumlauge, Ammoniak, Amoniumlauge, die eine Düngewirkung und resistenzfördernde Eigenschaften aufweisen, verwendet werden.

Verwendbar sind beispielsweise:
a) Phosphorsäure H3PO4
   aa) Calziumphosphat Ca3(PO4)2
   ab) Calziummonophosphat CaHPO4
   ac) Calziumdiphosphat Ca(H2PO4)2
   ad) Trippelkalziumphosphat
   af) Kaliumphosphat K3PO4
   ag) Monokaliumphosphat KH2PO4
   ah) Dikaliumphosphat K2HPO4
   ai) Tetrakaliumphosphat K4P2O7
   aj) Kaliumpolyphosphat
   ak) Natriumphosphat Na3PO4,
   al) Mononatriumphosphat NaH2PO4
   am) Dinatriumphosphat Na2HPO4
   an) Tetranatriumphosphat Na4P2O7
   ao) Natriumpolyphosphat
b) Phosphorige Säure H3PO3
   ba) Phosphorige Säure und deren Salzen
c) Schwefel S
   ca) Schwefelsäure H2S04
cb) Sulfate
cd) Sulfite, Sulfide und Thiosulfate K2S2O3, NH4)2S2O3, NH4)2S, K2S, H2S
   e) Salpetersäure HNO3
   ea) Kaliumnitrat KNO3
   eb) Natriumnitrat NaNO3
   ec) Kalziumnitrat CaNO3)2
   ed) Amoniumnitrat NH4NO3
   ef) Amoniumsulfat NH4)2SO4
   eg) Amoniumcarbonat NH4)2CO3
   ef) Amoniumphosphat NH4)3PO4
   ei) Monoamoniumphosphat NH4H2PO4
   ej) Diamoniumphosphat NH4)2HPO4

   f) Magnesiumoxid MgO
   fa) Magnesiumhydroxid Mg(OH)2
   fb) Magnesiumsulfat MgSO4
   fc) Magnesiumnitrat MgNO3)2
   fd) Magnesiumcarbonat MgCO3
   ff) Magnesiumphosphat MgHPO4

   g) Kalziumoxid CaO
   ga) Kalziumhydroxid Ca(OH)2
   gb) Kalzimcarbonat CaCO3
   gc) Kalziumnitrat CaNO3
   gd) Kalziumsulfat CaSO4
   ge) Kalziumphosphat Ca)3PO4)2, CaHPO4, Ca2H2PO4

Die Wirksamkeit ergibt sich aus den nachfolgend erläuterten Versuchen.
In beigefügten Tabellen sind charakteristische Daten zu den nachfolgenden Beispielen zusammengefasst.
Es zeigen im einzelnen:
Tabelle 1 Ergebnisse 2004 Mehltau -Befall an Rosen (3 wöchige Applikation)
Tabelle 2 Ergebnisse 2005 Mehltau -Befall an Rosen (3 wöchige Applikation)
Tabelle 3: Ergebnisse 2004 Mehltau -Befall an Gurken (3 wöchige Applikation)
Tabelle 4: Ergebnisse 2005 Mehltau -Befall an Gurken (3 wöchige Applikation)
Tabelle 5: Ergebnisse 2004 Mehltau -Befall an Gurken (3 wöchige Applikation)

### Wirkung der ersten Komponenten

Die Wirkung der Algenmehle, aufgeschlossene und nicht aufgeschlossene mit und ohne Aminosäuren, auf die Verbesserung des Wachstums und der Gesundheit der Pflanzen ist bekannt.

### Wirkung der zweiten Komponenten

Die Wirkung von Säuren und Salzen von Phosphor, Stickstoff, Kalium, Kalzium, Magnesium, Schwefel, Eisen, Mangan und Spurennährelementen auf die Pflanzen ist als Dünger ebenfalls bekannt.

### Wirkung der Kombinationsprodukte: Tabelle 5

Salze, Säuren und oder Laugen des Phosphor, Kalium, Stickstoff, Magnesium, Eisen, Schwefel haben Düngereffekte auf Boden und Pflanzen. Die Mischungen aus oben genannten Verbindungen, 1:1-Teile mit aufgeschlossenen und nicht aufgeschlossen Algenmehl -Extrakten führen zu induzierter Resistenz der Pflanzen gegenüber Krankheiten um ein Mehrfaches der einzelnen Stoffe und sind wirksamer als Düngemittel (NPK-Volldünger) und als Algenmehl (und oder Extrakte) aufgeschlossen oder nicht aufgeschlossen mit und ohne Aminosäuren. Die Blätter der Pflanzen sind dicker, kräftiger, dunkelgrüner, gesunder, weniger mit Pflanzenkrankheiten, wie mit Mehltau, befallen und nachhaltiger im Wachstum als alle Varianten. Das entscheidende ist dabei, dass die Gesundheit der Pflanzen stark zunimmt, bei gutem Wachstum der Pflanzen.

### Aufwandmenge:

Die oben genannten Produkte, mit Ausnahme der Algenmehle, aufgeschlossen oder nicht aufgeschlossen, können einen Gehalt an Phosphor (P2O5)) von 2 bis 27%, Stickstoff (N) von 2 bis 20 % Kalium (K2O) von 2 bis 20 % und Schwefel 2 bis 30 % aufweisen.

### Resultate:

Beispiel 1: die Mehltauresistenz der Rosen ist aus den Resultaten der Tabellen 1 und 2 in den Jahren 2004 und 2005 ersichtlich.
Beispiel 2: die Mehltauresistenz der Gurken ist aus den Tabellen 3 und 4 deutlich zu entnehmen. (Versuche 2004 und 2005)
Beispiel 3: der Vergleich der Einzelstoffe und in den Kombinationen mit Algenextrakt bzw. Aminosäuren kann man aus der Tabelle 5 entnehmen. Die Tabelle zeigt eindeutig, dass die Kombinationen eine Verbesserung der Resistenz der Pflanzen gegenüber Pflanzenkrankheiten bewirken.
Während die Widerstandskraft durch NPK-Dünger nicht verbessert wird, zeigt die Kombination mit Algenextrakten eine deutliche Wirkung, da die Versorgung der Pflanzen mit Nährstoffen durch den Schutzmechanismus der Alginate besser reguliert wird. Durch die behutsame Ernährung der Pflanzen bleiben sie gesünder als durch schockartige Überdosierung.
Auch die Unschädlichkeit der Kombination aus den oben genannten Stoffen mit aufgeschlossenem Algenmehl ist hervorzuheben.

Die Produkte können als Granulate gestreut oder als flüssige Mittel zum Spritzen, Sprühen, Gießen formuliert werden. Sie können auch mit Hilfsmitteln formuliert werden, die einen slow-release- Effekt bewirken.

Im Hinblick auf die ersten Komponenten des Präparates erwiesen sich zum Spritzen, Gießen oder Tauchen insbesondere Mischungen aus Algenextrakten mit Aminosäuren als vorteilhaft. Die Verwendung von Melasse sowie Spurennährelementen ist ebenfalls von Vorteil.

Im Hinblick auf eine Streufähigkeit der Präparate erwiesen sich insbesondere Mischungen aus granulierten Algenprodukten als vorteilhaft. Darüber hinaus ist die Verwendung von Tonmineralen, Düngern, beziehungsweise von Spurennährelementen oder organischen Materialien erfolgreich. Als organische Materialien sind insbesondere Humus, Huminstoffe, Komposte sowie Rindenmulch gemeint.

Bei der Verwendung von Salzen als zweite Komponente des Präparates kann über die jeweilige chemische Zusammensetzung des Salzes die Löslichkeit sowie die Wirkungsgeschwindigkeit beeinflusst werden. Eine langfristige Wirkung wird durch Zusatz von Natrium, Kalium, Ammonium, Kalzium oder deren Säuren und Laugen unterstützt. Spurennährelemente Kupfer, Zink, Mangan, Molybdän usw. sind zur Sicherung der Ernährung der Pflanzen vorteilhaft. Bewährt haben sich alle Phosphat-Verbindungen und Sulfite wie z.B. K- bzw. NH4)2S2O3 in der Kombinationen mit Algen-Extrakten, aufgeschlossenen und nicht aufgeschlossenen Algen sowie Aminosäuren und anderen organischen Stoffen wie Huminstoffe, Melasse, Vinasse, Kompost usw.

Im Hinblick auf die Zusammensetzung der Präparate soll noch einmal darauf hingewiesen werden, dass insbesondere ein Zusatz von Polysacchariden in aufgeschlossenen Algen zu einer gezielten Widerstandsfähigkeit, zum Schutz der Nährstoffe vor Auswaschung und Fixierung sowie kontinuierliche Dosierung der Nährstoffe an die Pflanzen, die Gesundheit der Pflanzen fördert und dem Boden Fruchtbarkeit verleiht. Darüber hinaus verstärken Säuren, Laugen und Salze, die nur in dieser Zusammensetzung mit Algen formuliert oder granuliert sind, die Pflanzenverträglichkeit.

Die Verwendung von Algenmaterial erweist sich gegenüber einer Verwendung von technischen Alginaten als vorteilhaft, da andere Herstellungsverfahren zur Anwendung kommen, die hier bei der Herstellung von Algenprodukten weniger aggressiv sind als bei der Herstellung von technischen Alginaten. Die natürlichen Produkteigenschaften werden durch unser Verfahren nicht beeinträchtigt.

**Tabelle 1**

| Ergebnisse 2004 Mehltau -Befall an Rosen (3 wöchige Applikation) | | | | | | |
|---|---|---|---|---|---|---|
| Algenextrakt + Aminosäuren + K-Phosphate + K-Thiosulfat ( = Mischung) im Vergleich | | | | | | |
| | | | | | | |

| Bonitur | Kontrolle | Algenextrakt | Aminosäuren | K-Phosphate | K-Thiosulfat | Mischung |
|---|---|---|---|---|---|---|
| Applikation | 0 | 0 | 0 | 0 | 0 | 0 |
| 4 Wochen | 0 | 0 | 0 | 0 | 0 | 0 |
| 8 Wochen | 50 % | 45 % | 45 % | 38 % | 35 % | 5 % |
| 16 Wochen | 70 % | 60 % | 60 % | 55 % | 50 % | 8 % |

**Tabelle 2**

| Ergebnisse 2005 Mehltau -Befall an Rosen (3 wöchige Applikation) | | | | | | |
|---|---|---|---|---|---|---|
| Algenextrakt + Aminosäuren + K-Phosphate + K-Thiosulfat ( = Mischung) im Vergleich | | | | | | |
| | | | | | | |

| Bonitur | Kontrolle | Algenextrakt | Aminosäuren | K-Phosphate | K-Thiosulfat | Mischung |
|---|---|---|---|---|---|---|
| Applikation | 0 | 0 | 0 | 0 | 0 | 0 |
| 4 Wochen | 0 | 0 | 0 | 0 | 0 | 0 |
| 8 Wochen | 30 % | 20 % | 20 % | 15 % | 10 % | 2 % |
| 16 Wochen | 60 % | 50 % | 50 % | 45 % | 40 % | 3 % |

**Tabelle 3**

| Ergebnisse 2004 Mehltau -Befall an Gurken (3 wöchige Applikation) | | | | | | |
|---|---|---|---|---|---|---|
| Algenextrakt + Aminosäuren + K-Phosphate + K-Thiosulfat ( = Mischung) im vergleich | | | | | | |
| | | | | | | |

| Bonitur | Kontrolle | Algenextrakt | Aminosäuren | K-Phosphate | K-Thiosulfat | Mischung |
|---|---|---|---|---|---|---|
| Applikation | 0 | 0 | 0 | 0 | 0 | 0 |
| 4 Wochen | 10 | 0 | 0 | 0 | 0 | 0 |
| 8 Wochen | 40 % | 35 % | 30 % | 25 % | 20 % | 2 % |
| 16 Wochen | 70 % | 60 % | 60 % | 55 % | 50 % | 4 % |

**Tabelle 4**

| Ergebnisse 2005 Mehltau -Befall an Gurken (3 wöchige Applikation) | | | | | | |
|---|---|---|---|---|---|---|
| Algenextrakt + Aminosäuren + K-Phosphate + K-Thiosulfat ( = Mischung) im vergleich | | | | | | |
| | | | | | | |

| Bonitur | Kontrolle | Algenextrakt | Aminosäuren | K-Phosphate | K-Thiosulfat | Mischung |
|---|---|---|---|---|---|---|
| Applikation | 0 | 0 | 0 | 0 | 0 | 0 |
| 4 Wochen | 10 | 0 | 0 | 0 | 0 | 0 |
| 8 Wochen | 30 % | 28 % | 26 % | 20 % | 14 % | 2 % |
| 16 Wochen | 40 % | 40 % | 30 % | 27 % | 22 % | 4 % |

**Tabelle 5**

| Ergebnisse 2004 Mehltau -Befall an Gurken (3 wöchige Applikation) | | | | | | |
|---|---|---|---|---|---|---|
| Algenextrakt + Aminosäuren + K-Phosphate + K-Thiosulfat ( = Mischung) im vergleich | | | | | | |
| | | | | | | |
| | | | | | | |
| | | | | | | |

| Mittel | Dosis | Pflanzenwachstum | Schäden | Mehltaubefall Vor d. Anwendung | Mehltaubefall 10 Wochen später | Schäden 10 W. später |
|---|---|---|---|---|---|---|
| Kontrolle | Wasser | Normal | keine | 0 | 70 % | Keine |
| Alginat 10 % | 1 %ig | Normal | keine | 0 | 65 % | Keine |
| Amino säuren 10 % | 1 %ig | Normal | keine | 0 | 60 % | Keine |
| K-Phosphat 10 % | 1 %ig | Düngereffekt | keine | 0 | 56 % | Keine |
| K-Thiosulfat 10 % | 1 %ig | Düngereffekt | keine | 0 | 50 % | Keine |
| K-Phosphat 10 % + K-Thiosulfat 10 % | 1 % ig | Düngereffekt Wachstumsverbesserung | keine | 0 | 40 % | Keine |
| Alginat +Aminosäuren 10 % | 1 %ig | Leichte Wachstums-Verbesserung | keine | 0 | 45 % | Keine |
| Alginat 10 % +Amin osäuren 10 % + K-Phosphat 10 % | 1 %ig | grün, breite Blätter, gutes Wachstum | keine | 0 | 30 % | Keine |
| Alginat 10 % +Amin osäur en 10 % + K-Phosphat 10 % + K-Thiosulfat 10 % | 1 %ig | dunkelgrün, breite Blätter, kräftiges Wachstum | Keine | 0 | 3 % | Keine |
| | | | | | | |
| | | | | | | |

## Patentansprüche

1. Präparat zur Behandlung von Pflanzen, das mindestens eine erste Komponente und eine zur ersten Komponente unterschiedliche zweite Komponente enthält, bei der die zweite Komponente als mindestens eine Verbindung aus der Gruppe von Phosphor, Schwefel, Kalium (insbesondere Sulfite), Stickstoff, Kalzium, Magnesium in Säure, Lauge oder Salzen realisiert ist, sowie bei dem die erste Komponente mindestens eine organische Verbindung enthält, die aus der Gruppe der aufgeschlossenen oder nicht aufgeschlossen Algenmehle, Algenextrakte oder Pasten ausgewählt ist, **dadurch gekennzeichnet, dass** eine Verwendung zur Erhöhung der Resistenz der Pflanzen und/oder der Verbesserung der Bodenfruchtbarkeit vorgesehen ist und dass in der organischen Komponente Algenmaterial, insbesondere Braunalgen und/oder Rotalgen enthalten ist.

2. Präparat nach Anspruch 1, **dadurch gekennzeichnet, dass** die zweite Komponente mindestens eine anorganische Komponente enthält.

3. Präparat nach Anspruch 1 oder 2, **dadurch gekennzeichnet, dass** die erste Komponente ein Produkt aus Landpflanzen enthält.

4. Präparat nach einem der Ansprüche 1 bis 3, **dadurch gekennzeichnet, dass** in der ersten Komponente ein Produkt aus der Gruppe der Extrakte, Aufschlüsse, Breie, Säfte oder Mehle enthalten ist.

5. Präparate nach einem der Ansprüche 1 bis 4, **dadurch gekennzeichnet, dass** die erste Komponente mindestens ein Polysaccharid enthält.

6. Präparat nach Anspruch 5, **dadurch gekennzeichnet, dass** das Polysaccharid aus der Gruppe Melasse, Pektine, Zucker sowie Salze realisiert ist.

7. Präparat nach einem der Ansprüche 1 bis 6, **dadurch gekennzeichnet, dass** die erste Komponente einen Humus enthält.

8. Präparat nach Anspruch 7, **dadurch gekennzeichnet, dass** der Humus als ein Produkt aus der Gruppe der Huminstoffe, Komposte, Rindenmulche sowie Holzschnitzel realisiert ist.

9. Präparat nach einem der Ansprüche 1 bis 8, **dadurch gekennzeichnet, dass** die erste Komponente synthetische organische Verbindungen enthält.

10. Präparat nach einem der Ansprüche 1 bis 9, **dadurch gekennzeichnet, dass** die erste Komponente Bestandteile aus Wasserpflanzen enthält.

11. Präparat nach einem der Ansprüche 1 bis 10, **dadurch gekennzeichnet, dass** die erste Komponente Bestandteile aus Meereswasserpflanzen enthält.

12. Präparat nach einem der Ansprüche 1 bis 11, **dadurch gekennzeichnet, dass** die erste Komponente Bestandteile aus Süßwasserpflanzen enthält.

13. Präparat nach einem der Ansprüche 1 bis 12, **dadurch gekennzeichnet, dass** die erste Komponente aus der Gruppe der Algen, Extrakte, Breie, Mehle, Aufschlüsse und Alginate realisiert ist.

14. Präparat nach einem der Ansprüche 1 bis 13, **dadurch gekennzeichnet, dass** die erste Komponente mindestens eine synthetische Verbindung enthält.

15. Präparat nach einem der Ansprüche 1 bis 14, **dadurch gekennzeichnet, dass** die erste Komponente mindestens ein Kolloid enthält.

16. Präparat nach einem der Ansprüche 1 bis 15, **dadurch gekennzeichnet, dass** die zweite Komponente mindestens ein Silikatprodukt enthält.

17. Präparat nach einem der Ansprüche 1 bis 16, **dadurch gekennzeichnet, dass** die zweite Komponente Erden enthält.

18. Präparat nach einem der Ansprüche 1 bis 17, **dadurch gekennzeichnet, dass** die zweite Komponente Tonmineral enthalten.

19. Präparat nach einem der Ansprüche 1 bis 18, **dadurch gekennzeichnet, dass** die zweite Komponente Sande enthält.

20. Präparat nach einem der Ansprüche 1 bis 19, **dadurch gekennzeichnet, dass** die zweite Komponente einen Dünger enthält.

21. Präparat nach einem der Ansprüche 1 bis 20, **dadurch gekennzeichnet, dass** die zweite Komponente Spurennährelemente enthält.

22. Präparat nach einem der Ansprüche 1 bis 21, **dadurch gekennzeichnet, daß** eine Anwendung zur Erhöhung einer Krankheitsresistenz der Pflanzen vorgesehen ist.

23. Präparat nach einem der Ansprüche 1 bis 21, **dadurch gekennzeichnet, daß** eine Anwendung zur Verbesserung der Nährstoffversorgung der Pflanzen vorgesehen ist.

24. Präparat nach einem der Ansprüche 1 bis 21, **dadurch gekennzeichnet, daß** eine Anwendung zur Verbesserung der Bodenfruchtbarkeit vorgesehen ist.

25. Präparat nach einem der Ansprüche 1 bis 21, **dadurch gekennzeichnet, daß** eine Anwendung zur verbesserung des Wachstums der Pflanzen vorgesehen ist.

26. Präparat nach einem der Ansprüche 1 bis 26, **dadurch gekennzeichnet, daß** die zweite Komponente mindestens ein Phosphat enthält.

27. Präparat nach einem der Ansprüche 1 bis 26, **dadurch gekennzeichnet, daß** die zweite Komponente mindestens eine Verbindung aus der Gruppe der Sulfite, Sulfide sowie Thiosulfate enthält.

28. Präparat nach einem der Ansprüche 1 bis 27, **dadurch gekennzeichnet, daß** eine Anwendung zur Verminderung einer Auswaschung von Bodenstoffen vorgesehen ist.

29. Präparat nach einem der Ansprüche 1 bis 28, **dadurch gekennzeichnet, daß** eine Anwendung zur Fixierung von Bodenstoffen vorgesehen ist.

30. Präparat nach einem der Ansprüche 1 bis 29, **dadurch gekennzeichnet, daß** eine Anwendung zur verbesserung des Luft- und/oder Wasserhaushaltes des Bodens vorgesehen ist.
